Europäisches Patentamt

European Patent Office

Office européen des brevets

(19)

(11) Veröffentlichungsnummer: **0 087 127**
**B1**

(12) **EUROPÄISCHE PATENTSCHRIFT**

(45) Veröffentlichungstag der Patentschrift:
12.06.85

(51) Int. Cl.⁴: **C 02 F 3/30** // C02F1/58, C02F1/52

(21) Anmeldenummer: 83101518.5

(22) Anmeldetag: 17.02.83

(54) **Verfahren und Vorrichtung zur biologischen Reinigung von phosphathaltigem Abwasser.**

(30) Priorität: 23.02.82 DE 3206440

(43) Veröffentlichungstag der Anmeldung:
31.08.83 Patentblatt 83/35

(45) Bekanntmachung des Hinweises auf die Patenterteilung:
12.06.85 Patentblatt 85/24

(84) Benannte Vertragsstaaten:
AT CH DE FR LI NL SE

(56) Entgegenhaltungen:
DE - A - 2 442 031
DE - A - 2 715 256
DE - B - 2 648 797
US - A - 4 141 822

(73) Patentinhaber: Linde Aktiengesellschaft,
Abraham-Lincoln-Strasse 21, D-6200 Wiesbaden (DE)

(72) Erfinder: Reimann, Hans, Dr. rer. nat.,
Rudolf-Wilke-Weg 21, D-8000 München 71 (DE)

(74) Vertreter: Schaefer, Gerhard, Dr., Linde
Aktiengesellschaft Zentrale Patentabteilung,
D-8023 Höllriegelskreuth (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur biologischen Reinigung von phosphathaltigem Abwasser, bei dem das zulaufende Abwasser in Gegenwart von belebtem Schlamm zum Abbau organischer Kohlenwasserstoffverbindungen und zur Aufnahme von Phosphat durch im Belebtschlamm vorhandene Mikroorganismen aerob behandelt wird und anschliessend das Abwasser/Belebtschlamm-Gemisch zu gereinigtem, im wesentlichen phosphatfreiem Wasser und phosphathaltigem Schlamm aufgeteilt wird, der wenigstens teilweise als Rücklaufschlamm zurückgeleitet wird.

Ein derartiges Verfahren zum Abtrennen von Phosphaten aus Abwasser wird beispielsweise in der US-A Nr., 4141822 beschrieben. Dabei wird bei diesem bekannten Verfahren der mit Phosphat angereicherte Schlamm einer Phosphatabtrennung zugeleitet und zum Ansetzen gebracht. Mindestens ein Teil des abgesetzten Schlammes wird unter anaeroben Bedingungen für eine Zeitdauer gehalten, die ausreicht, um Phosphat in die flüssige Phase des abgesetzten Schlammes freizusetzen, die dann in die überstehende Flüssigkeit aufsteigt und eine mit Phosphat angereicherte Flüssigkeit bildet. Mindestens ein Teil des abgesetzten und eingedickten phosphatarmen Schlammes wird von einem unteren Abschnitt der Phosphatabtrennzone als belebter Schlamm in das Belebungs- bzw. Begasungsbecken zurückgeleitet. Um das in die Flüssigkeit des anaeroben Schlammes freigesetzte Phosphat beschleunigt in die überstehende Flüssigkeit zu überführen, wird der anaerobe Schlamm mit einem wässerigen, einer geringeren Phosphatgehalt als der anaerobe Schlamm aufweisenden Medium in Kontakt gebracht.

Dieses Verfahren hat jedoch den Nachteil, dass die Phosphatabtrenneinrichtung für die langen Aufenthaltszeiten unwirtschaftlich gross ausgebildet sein muss, damit der Schlamm genügend eindicken kann. Durch das Inberührungbringen mit einem wässerigen Medium (Elutriation) wird überdies der zu behandelnde Seitenstrom nachteilig vergrössert.

Aufgabe der vorliegenden Erfindung ist es daher, die aufgezeigten Mängel zu beseitigen und somit die Phosphatabtrennung wirtschaftlicher zu gestalten.

Diese Aufgabe wird erfindungsgemäss dadurch gelöst, dass zumindest ein Teilstrom des Abwassers vor der aeroben Behandlung mit zumindest einem Teilstrom des Rücklaufschlammes in einer anaeroben Mischzone vermischt und anschliessend teilweise der aeroben Behandlung und teilweise einer Phosphatabtrennung unterworfen wird, dass der bei der Phosphatabtrennung anfallende phosphatarme Schlamm zumindest teilweise der aeroben Behandlung zugeführt und die anfallende, mit Phosphat angereicherte Flüssigkeit weiterbehandelt wird. Das erfindungsgemässe Verfahren ist so ausgelegt, dass in der anaeroben Mischzone das Phosphat weitgehend von den Mikroorganismen an die Flüssigkeit abgegeben und in der anschliessenden Phosphatabtrennung die mit Phosphat angereicherte Flüssigkeit von den Mikroorganismen abgetrennt wird.

Dabei wird die Verweilzeit in der anaeroben Mischzone kurz und relativ konstant gehalten bzw. den biologischen Erfordernissen, d.h. beispielsweise dem Phosphatgehalt des zulaufenden Abwassers, angepasst. Während der aeroben Behandlung des anaerob vorbehandelten Abwasser/Belebtschlamm-Gemisches wird in Gegenwart von phosphatarmen Schlamm aus der Phosphatabtrennzone anschliessend das im Abwasser vorhandene Phosphat von den Mikroorganismen in deren Zellen eingelagert und in der nachgeschalteten Nachklärung vom Wasser durch Absetzen des phosphathaltigen Schlammes abgetrennt, der in der anaeroben Mischzone mit zulaufendem Abwasser vermischt wird. Auf diese Weise kann überraschend eine noch verbesserte Phosphatabtrennung in kürzerer Zeit und mit hohem Eindickgrad erzielt werden, wodurch eine kleinere Phosphatabtrennzone verwendet werden kann, die in ihren Herstellungskosten günstiger ist.

Als vorteilhaft hat sich dabei erwiesen, wenn die Vermischung des Teilstromes des Abwassers und des Rücklaufschlammes anaerob mit einer Intensität von 10 bis 50 W/m³ durchgeführt wird.

Nach einer bevorzugten Ausführungsform des erfindungsgemässen Verfahrens wird der bei der Phosphatabtrennung anfallende phosphatarme Schlamm teilweise der anaeroben Mischzone zugeführt. Das Rückführen eines Teilstromes des anaerob bzw. fakultativ eingearbeiteten, phosphatarmen Schlammes in die anaerobe Mischzone bewirkt in dieser eine beschleunigte Abgabe des Phosphates durch die Mikroorganismen und somit insgesamt eine noch weitgehendere Phosphateliminierung auch bei hohen Phosphatgehalt.

Weiterhin ist vorgesehen, die mit Phosphat angereicherte Flüssigkeit einer Phosphatfällung zu unterwerfen und anschliessend ggf. zu der aeroben Behandlung zurückzuleiten. Die dabei zu behandelnde Flüssigkeitsmenge ist im Vergleich zum bekannten Verfahren wesentlich geringer und dadurch besser zu handhaben.

In Weiterbildung des Erfindungsgedankens ist es ausserdem möglich, einen Teil des Rücklaufschlammes der aeroben Behandlung zuzuführen. Diese Verfahrensführung kann insbesondere dann zur Anwendung kommen, wenn der Phosphatgehalt des zu reinigenden Abwassers gering ist.

Bevorzugt wird überdies die aerobe Behandlung in Gegenwart von reinem Sauerstoff durchgeführt.

Die Erfindung betrifft auch eine Vorrichtung zur Durchführung des erfindungsgemässen Verfahrens mit einem Zulauf zu einem Belebungsbecken und einer dem Belebungsbecken nachgeschalteten Nachkläreinrichtung mit Schlammrücklaufleitung, die dadurch gekennzeichnet ist, dass dem Belebungsbecken eine anaerobe Mischzone vorgeschaltet ist, der Zulauf eine Zweigleitung zur anaeroben Mischzone aufweist, die Schlammrücklaufleitung mit der anaeroben Mischzone verbunden ist, der anaeroben Mischzone über einen Ablauf eine Phosphatabtrenneinrichtung nachgeschaltet ist, an die Phosphatabtrenneinrichtung ein Ablauf für die mit Phosphat angereicherte Flüssigkeit und ein Schlammablauf angeschlossen sind und der Schlammablauf mit dem Belebungsbecken verbunden ist.

Die Vorrichtung kann mit Vorteil so ausgebildet sein, dass die Schlammrücklaufleitung über eine Stichleitung mit dem Belebungsbecken und vorteilhaft der Schlammablauf über eine Zweigleitung mit der anaeroben Mischzone verbunden ist. Bevorzugt ist ausserdem der Ablauf für die mit Phosphat angereicherte Flüssigkeit mit einer Einrichtung zur Phosphatfällung und ggf. mit dem Belebungsbecken verbunden.

Das erfindungsgemässe Verfahren sowie die dazugehörige Vorrichtung kann bei allen Abwasserreinigungsanlagen zur Phosphatabtrennung angewendet werden. Die Erfindung kann jedoch auch bei Nitrifikations- und Denitrifikationsverfahren eingesetzt werden.

Im folgenden sei das erfindungsgemässe Verfahren anhand eines schematisch dargestellten Ausführungsbeispiels näher erläutert.

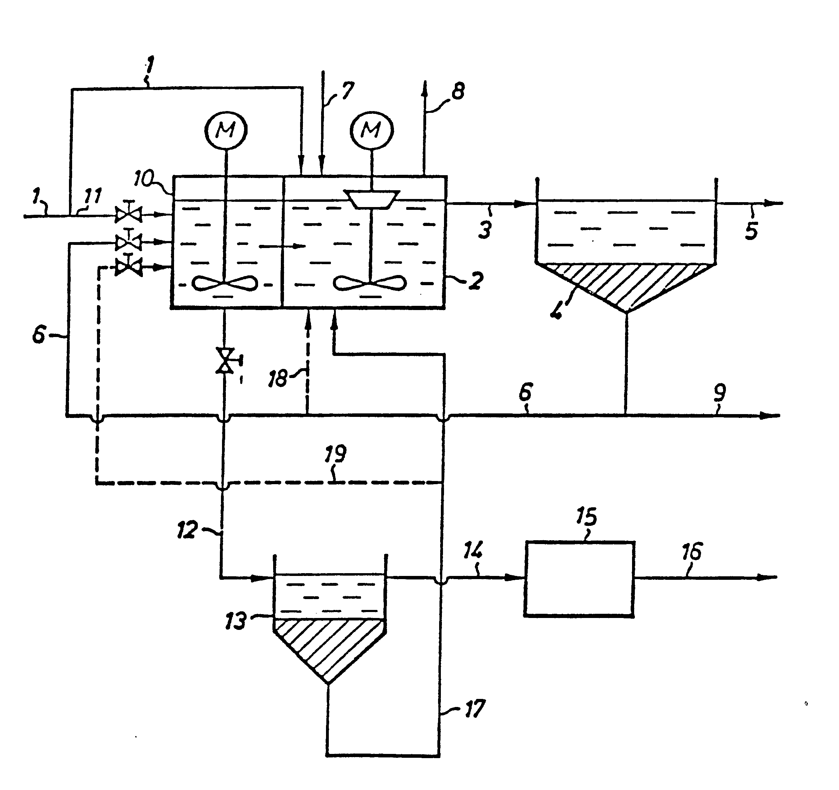

Die Abwasserreinigungsanlage gemäss der Figur besteht im wesentlichen aus einem Zulauf 1 für zu reinigendes Abwasser, einem Belebungsbecken 2 mit Ablauf 3 zu einem nachgeschalteten Nachklärbecken 4, an das ein Ablauf 5 für gereinigtes Abwasser und eine Schlammrücklaufleitung 6 sowie eine Leitung 9 für Überschussschlamm angeschlossen sind. In der gezeigten Darstellung ist das Belebungsbecken 2 gegenüber der Atmosphäre abgedeckt. Bei Verwendung von Luft zur Begasung kann das Belebungsbecken jedoch auch offen ausgebildet sein. Im vorliegenden Fall wird reiner Sauerstoff zur Begasung verwendet, der über eine Leitung 7 zugeführt und in bekannter Weise, z.B. über nahe dem Beckenboden angeordnete Gasverteiler oder über Oberflächenbelüfter, eingetragen wird. Abgas kann über Leitung 8 abgeblasen werden.

Dem Belebungsbecken 2 ist eine anaerobe Mischzone 10 vorgeschaltet, die über eine Zweigleitung 11 mit dem Zulauf 1 für zu reinigendes Abwasser verbunden ist. Die Schlammrücklaufleitung 6 ist ebenfalls mit der anaeroben Mischzone 10 verbunden.

Das zu reinigende phosphathaltige Abwasser gelangt teilweise über den Zulauf 1 und die Zweigleitung 11 in die anaerobe Mischzone 10, wird mit Rücklaufschlamm aus Leitung 6 anaerob mit einer Intensität von vorzugsweise 10 bis 50 W/m³ vermischt, teilweise dem Belebungsbecken 2 und teilweise über einen Ablauf 12 einer Phosphatabtrenneinrichtung 13 zugeführt.

In der anaeroben Mischzone geben die im Schlamm vorhandenen Mikroorganismen das Phosphat an die flüssige Phase ab. In der Phosphatabtrenneinrichtung 13 setzt sich der Schlamm ab und wird so von der mit Phosphat angereicherten Flüssigkeit getrennt. Diese wird über einen Ablauf 14 abgezogen und ggf. einer Einrichtung 15 zur Phosphatfällung zugeführt, deren Ablauf 16 mit dem Belebungsbecken 2 verbunden sein kann, bei Bedarf über eine Vorkläreinrichtung. Der phosphatarme Schlamm wird aus dem unteren Abschnitt der Phosphatabtrenneinrichtung 13 über einen Schlammablauf 17 abgezogen und zumindest teilweise in das Belebungsbecken 2 geführt.

In dem Belebungsbecken 2 wird ein Teilstrom des anaerob vorbehandelten Abwasser/Belebtschlamm-Gemisches unter Zuführen von phosphatarmem Belebtschlamm und von Abwasser aus Leitung 1 und Sauerstoff aus Leitung 7 vermischt, so dass die im Belebtschlamm vorhandenen Mikroorganismen die organischen Kohlenwasserstoffverbindungen im wesentlichen abbauen und das vorhandene Phosphat aufnehmen. Das Abwasser/Belebtschlamm-Gemisch wird über den Ablauf 3 aus dem Belebungsbecken 2 abgezogen und einem Nachklärbecken 4 zugeleitet, aus dem das gereinigte, im wesentlichen phosphatfreie Wasser über Leitung 5 abgeleitet wird. Der abgesetzte, Phosphat enthaltende Schlamm wird über die Schlammrücklaufleitung 6 der anaeroben Mischzone 10 zugeführt, während Überschussschlamm über Leitung 9 abgezogen wird.

Erfindungsgemäss ist dabei die Möglichkeit vorgesehen, insbesondere bei geringem Phosphatgehalt im zu reinigenden Abwasser einen Teilstrom des Rücklaufschlammes über eine Stichleitung 18 in das Belebungsbecken zu leiten.

Bei insbesondere hohem Phosphatgehalt im zu reinigenden Abwasser ist es überdies möglich, einen Teilstrom des Schlammablaufes aus der Phosphatabtrenneinrichtung 13 über eine Zweigleitung 19 in die anaerobe Mischzone zu führen. Auf diese Weise kann erreicht werden, dass die Mikroorganismen mehr Phosphat an die Flüssigkeit abgeben und damit mehr Phosphat in den weiter zu behandelnden Seitenstrom gelangt und damit auch bei hoher Phosphatbelastung ein ausreichender Reinigungsgrad erzielt wird.

## Patentansprüche

1. Verfahren zur biologischen Reinigung von phosphathaltigem Abwasser, bei dem das zulaufende Abwasser in Gegenwart von belebtem Schlamm zum Abbau organischer Kohlenwasserstoffverbindungen und zur Aufnahme von Phosphat durch im Belebtschlamm vorhandene Mikroorganismen aerob behandelt wird und anschliessend das Abwasser/Belebtschlamm-Gemisch zu gereinigtem, im wesentlichen phosphatfreiem Wasser und phosphathaltigem Schlamm aufgeteilt wird, der wenigstens teilweise als Rücklaufschlamm zurückgeleitet wird, dadurch gekennzeichnet, dass zumindest ein Teilstrom des Abwassers vor der aeroben Behandlung mit zumindest einem Teilstrom des Rücklaufschlammes in einer an aeroben Mischzone vermischt und anschliessend teilweise der aeroben Behandlung und teilweise einer Phosphatabtrennung unterworfen wird, dass der bei der Phosphatabtrennung anfallende phosphatarme Schlamm zumindest teilweise der aeroben Behandlung zugeführt und die anfallende, mit Phosphat angereicherte Flüssigkeit weiterbehandelt wird.

2. Verfahren nach Anspruch 1, dadurch gekennzeichnet, dass die Vermischung des Teilstroms des Abwassers und des Rücklaufschlammes anaerob mit einer Intensität von 10 bis 50 W/m³ durchgeführt wird.

3. Verfahren nach einem der Ansprüche 1 oder 2, dadurch gekennzeichnet, dass der bei der Phosphatabtrennung anfallende phosphatarme Schlamm teilweise der anaeroben Mischzone zugeführt wird.

4. Verfahren nach einem der Ansprüche 1 bis 3, dadurch gekennzeichnet, dass die mit Phosphat angereicherte Flüssigkeit einer Phosphatfällung unterworfen und ggf. zu der aeroben Behandlung zurückgeleitet wird.

5. Verfahren nach einem der Ansprüche 1 bis 4, dadurch gekennzeichnet, dass ein Teil des Rücklaufschlammes der aeroben Behandlung zugeführt wird.

6. Verfahren nach einem der Ansprüche 1 bis 5, dadurch gekennzeichnet, dass die aerobe Behandlung unter Verwendung von reinem Sauerstoff durchgeführt wird.

7. Vorrichtung zur Durchführung des Verfahrens nach einem der Ansprüche 1 bis 6 mit einem Zulauf zu einem Belebungsbecken und einer dem Belebungsbecken nachgeschalteten Nachkläreinrichtung mit Schlammrücklaufleitung, dadurch gekennzeichnet, dass dem Belebungsbecken (2) eine anaerobe Mischzone (10) vorgeschaltet ist, dass der Zulauf (1) eine Zweigleitung (11) zur anaeroben Mischzone (10) aufweist, dass die Schlammrücklaufleitung (6) mit der anaeroben Mischzone (10) verbunden ist, dass der an aeroben Mischzone (10) über einen Ablauf (12) eine Phosphatabtrenneinrichtung (13) nachgeschaltet ist, dass an die Phosphatabtrenneinrichtung (13) ein Ablauf (14) für die mit Phosphat angereicherte Flüssigkeit und ein Schlammablauf (17) angeschlossen sind, und dass der Schlammablauf (17) mit dem Belebungsbecken (2) verbunden ist.

8. Vorrichtung nach Anspruch 7, dadurch gekennzeichnet, dass die Schlammrücklaufleitung (6) über eine Stichleitung (18) mit dem Belebungsbecken (2) verbunden ist.

9. Vorrichtung nach einem der Ansprüche 7 oder 8, dadurch gekennzeichnet, dass der Schlammablauf (17) über eine Zweigleitung (19) mit der anaeroben Mischzone (10) verbunden ist.

10. Vorrichtung nach einem der Ansprüche 7 bis 9, dadurch gekennzeichnet, dass der Ablauf (14) für die mit Phosphat angereicherte Flüssigkeit mit einer Einrichtung (15) zur Phosphatfällung und ggf. mit dem Belebungsbecken (2) verbunden ist.

## Claims

1. A process for the biological purification of phosphate-containing waste water, in which, in the presence of activated sludge, the incoming waste water is aerobically treated for the decomposition of organic hydrocarbon compounds and the absorption of phosphate, by micro-organisms present in the activated sludge, and the waste water/activated sludge mixture is subsequently divided into purified, essentially phosphate-free water and phosphate-containing sludge which is at least partially recycled as return sludge, characterised in that, prior to the aerobic treatment, at least a part stream of the waste water is mixed with at least a part stream of the return sludge in an anaerobic mixing zone and thereafter is subjected partially to the aerobic treatment and partially to a phosphate separation; and in that the phosphate-poor sludge, which accumulates during the phosphate-separation step, is at least partially fed to the aerobic treatment and the resulting liquid, which is enriched with phosphate, is further treated.

2. A process as claimed in Claim 1, characterised in that the mixing of the part stream of the waste water and the return sludge is anaerobically carried out with an intensity of 10 to 50 W/m³.

3. A process as claimed in Claim 1 or 2, characterised in that the phosphate-poor sludge resulting from the phosphate-separation step is partially fed to the anaerobic mixing zone.

4. A process as claimed in one of Claims 1 to 3, characterised in that the phosphate-enriched liquid is subjected to a phosphate precipitation and, if necessary, returned to the aerobic treatment.

5. A process as claimed in one of Claims 1 to 4, characterised in that a part of the return sludge is fed to the aerobic treatment.

6. A process as claimed in one of Claims 1 to 5, characterised in that the aerobic treatment is carried out using pure oxygen.

7. Apparatus for carrying out the process as claimed in one of Claims 1 to 6, comprising an inlet into an activating basin and a final clarification device which is connected following the activating basin and a sludge return line, characterised in that the activating basin (2) is preceded by an anaerobic mixing zone (10); in that the inlet (1) has a branch line (11) to the anaerobic mixing zone (10); in that the sludge return line (6) is connected to the anaerobic mixing zone (10); in that the mixing zone (10) is followed by a phosphate-separation device (13) through an outlet (12); in that an outlet (14) for the phosphate-enriched liquid and a sludge outlet (17) are connected to the phosphate-separation device (13); and in that the sludge outlet (17) is connected to the activating basin (2).

8. Apparatus as claimed in Claim 7, characterised in that the sludge return line (6) is connected to the activating basin (2) by means of a bypass line (18).

9. Apparatus as claimed in Claim 7 or 8, characterised in that the sludge outlet (17) is connected to the anaerobic mixing zone (10) by a bypass line (19).

10. Apparatus as claimed in one of Claims 7 to 9, characterised in that the outlet (14) for the phosphate-enriched liquide is connected to a device (15) for phosphate precipitation and, if necessary, to the activating basin (2).

## Revendications

1. Procédé de purification biologique d'eaux résiduaires enfermant des phosphates, dans lequel les eaux résiduaires amenées sont soumises à un traitement aérobie, en présence de boue activée, en vue de la dégradation des composés organiques à base de liaisons hydrocarbures, et en vue du captage du phosphate par des micro-organismes présents dans la boue activée, après quoi on sépare le mélange d'eaux résiduaires et de boue activée en eau purifiée sensiblement exempte de phosphate et en boue renfermant du phosphate qui est recyclée, au moins partiellement, sous forme de boue de recyclage, caractérisé en ce qu'au moins un courant partiel d'eaux résiduaires est mélangé, avant le traitement aérobie, à au moins un courant partiel de la boue de recyclage, dans une zone de mélange anaérobie, et est ensuite soumis partiellement au traitement aérobie et partiellement à une séparation du phosphate, en ce que la boue pauvre en phosphate, obtenue lors de la séparation de phosphate, est soumise au moins partiellement au traitement aérobie, et en ce que le liquide enrichi en phosphate, qui est alors obtenu, est soumis à un traitement subséquent.

2. Procédé selon la revendication 1, caractérisé en ce que le mélange du courant partiel d'eaux résiduaires et de la boue de recyclage est effectué de manière anaérobie avec une intensité de 10 à 50 W/m³.

3. Procédé selon une des revendications 1 ou 2, caractérisé en ce que la boue pauvre en phosphate, obtenue lors de la séparation de phosphate, est amenée partiellement vers la zone de mélange anaérobie.

4. Procédé selon une des revendications 1 à 3, caractérisé en ce que le liquide enrichi en phosphate est soumis à une précipitation de phosphate et, le cas échéant, recyclé vers le traitement aérobie.

5. Procédé selon une des revendications 1 à 4, caractérisé en ce qu'une partie de la boue de recyclage est amenée vers le traitement aérobie.

6. Procédé selon une des revendications 1 à 5, caractérisé en ce que le traitement aérobie est effectué avec utilisation d'oxygène pur.

7. Dispositif pour la mise en œuvre du procédé selon une des revendications 1 à 6, comportant une conduite d'amenée vers une cuve d'activation et une installation de postclarification disposée en aval de la cuve d'activation et comprenant une conduite de boue de recyclage, caractérisé en ce qu'une zone de mélange anaérobie (10) est disposée en aval de la cuve d'activation (2), en ce que l'amenée (1) comporte une conduite de dérivation (11) vers la zone de mélange anaérobie (10), en ce que la conduite de boue de recyclage (6) est reliée à la zone de mélange anaérobie (10), en ce qu'une installation de séparation de phosphate (13) est disposée en aval de la zone de mélange anaérobie (10) *via* une évacuation (12), en ce qu'une évacuation (14) du liquide enrichi en phosphate et une évacuation de boue (17) sont branchées sur l'installation de séparation de phosphate (13), et en ce que l'évacuation de boue (17) est reliée à la cuve d'activation (2).

8. Dispositif selon la revendication 7, caractérisé en ce que la conduite de boue de recyclage (6) est reliée à la cuve d'activation (2) par une conduite d'embranchement (18).

9. Dispositif selon une des revendications 7 ou 8, caractérisé en ce que l'évacuation de boue (17) est reliée à la zone de mélange anaérobie (10) par une conduite de dérivation (19).

10. Dispositif selon une des revendications 7 à 9, caractérisé en ce que l'évacuation (14) du liquide enrichi en phosphate est reliée à une installation (15) de précipitation de phosphate et, le cas échéant, à la cuve d'activation (2).